# EUROPEAN PATENT APPLICATION

(11) **EP 4 582 846 A1**
(43) Date of publication of application: **09.07.2025**
(21) Application number: 23860702.2
(22) Date of filing: 27.07.2023
(51) Int. Cl.: G02B 7/09, G02B 7/00, G03B 3/10, G03B 13/36, G03B 17/02

(54) **LENS DRIVING DEVICE, CAMERA MODULE, AND OPTICAL INSTRUMENT**

(30) Priority: 30.08.2022 KR 20220109519
(71) Applicant: LG INNOTEK CO. LTD, Gangseo-gu Seoul 07796 (KR)
(72) Inventor: KIM, Dae Young, Seoul 07796 (KR)
(74) Representative: DREISS Patentanwälte PartG mbB
(86) International application number: PCT/KR2023/010967
(87) International publication number: WO 2024/049021

(57) **Abstract**

The present embodiment comprises: a fixing part; a movement part arranged inside the fixing part; a driving magnet arranged on the movement part; a coil arranged on the fixing part to correspond to the driving magnet; and a ball arranged between the fixing part and the movement part, wherein the ball guides the movement part to move in an optical axial direction with respect to the fixing part, the fixing part comprises a first side plate and a second side plate arranged on the opposite sides as each other, and a third side plate and a fourth side plate which connect the first and the second side plate and are arranged on the opposite sides as each other, the movement part comprises a first side surface and a second side surface arranged on the opposite sides as each other, and a third side surface and a fourth side surface which connect the first side surface and the second side surface and are arranged on the opposite sides as each other, the first through fourth side plates facing the first through fourth side surfaces, the driving magnet moves the movement part in the optical axial direction via interaction with the coil, and comprises a first driving magnet arranged on the first side surface of the movement part, and a second driving magnet arranged on the third side surface of the movement part, and the ball comprises a first ball arranged in a first corner region at which the first side plate and the fourth side plate of the fixing part are connected, and a second ball arranged in a second corner region at which the second side plate and the third side plate of the fixing part are connected.

## Description

### [Technical Field]

The present embodiment relates to a lens driving device.

### [Background Art]

A camera device is a device that photographs a picture or video of a subject, and is installed in optical instruments such as smartphones, drones, and vehicles.

Camera devices require an auto focus (AF) function that automatically adjusts the focus according to the distance between the camera device and the subject. In addition, optical image stabilization (OIS) function that compensates for image shaking caused by the user's movement is required to improve image quality.

However, as the resolution of image sensors has increased in recent years, the lens diameter has increased, and the driving force required to move the lens to perform autofocus or image stabilization functions is increasing.

### [Detailed Description of the Invention]

### [Technical Subject]

The present embodiment is intended to provide a lens driving device that provides increased driving force within a limited size.

### [Technical Solution]

A lens driving device according to the present embodiment comprises: a fixing part; a movement part being arranged inside the fixing part; a driving magnet being arranged on the movement part; a coil being arranged on the fixing part to correspond to the driving magnet; and a ball being arranged between the fixing part and the movement part, wherein the ball guides the movement part to move in an optical axial direction against the fixing part, wherein the fixing part includes a first side plate and a second side plate being arranged opposite to each other, and a third side plate and a fourth side plate connecting the first and second side plates and being arranged opposite to each other, wherein the movement part comprises a first side surface and a second side surface being arranged opposite to each other, and a third side surface and a fourth side surface connecting the first side surface and the second side surface being arranged opposite to each other, wherein the first to fourth side plates face the first to fourth side surfaces, wherein the driving magnet moves the movement part in the optical axial direction via the interaction with the coil, wherein the driving magnet includes a first driving magnet being arranged on the first side surface of the movement part, and a second driving magnet being arranged on the third side surface of the movement part, and wherein the ball includes a first ball being arranged in a first corner region where the first side plate and the fourth side plate of the fixing part are connected, and a second ball being arranged in a second corner region where the second side plate and the third side plate of the fixing part are connected.

The first side plate includes a first protruded portion being protruded from an inner surface of the first side plate, the first protruded portion includes a groove, and the first ball is arranged in the groove of the first side plate.

The third side plate includes a second protruded portion being protruded from an inner surface of the third side plate, the second protruded portion includes a groove, and the second ball is arranged in the groove of the third side plate.

The first side surface includes a first groove being formed inwardly of the moving part on the surface of the first side surface, and the third side surface includes a second groove being formed inwardly of the moving part on the surface of the third side surface.

The first protruded portion of the first side plate is arranged in the first groove of the first side surface, and the second protruded portion of the third side plate is arranged in the second groove of the third side surface.

The first ball is in contact with the first protruded portion of the first side plate and the first groove of the first side surface, and the second ball is in contact with the second protruded portion of the third side plate and the second groove of the third side surface.

It includes a first yoke being arranged on the outside of the fixed portion and overlapped with the first side plate in a direction perpendicular to the optical axis direction, and a second yoke being arranged on the outside of the fixed portion and overlapped with the third side plate in a direction perpendicular to the optical axis direction.

The first ball includes a plurality of first balls, the second ball includes a plurality of second balls, the plurality of first balls is arranged in the optical axis direction, and the plurality of second balls is arranged in the optical axis direction.

A lens driving device according to a first embodiment comprises: a fixing part; a movement part being arranged inside the fixing part; a driving magnet being arranged on the movement part; a coil being arranged on the fixing part to correspond to the driving magnet; and a ball being arranged between the fixing part and the movement part, wherein the ball guides the movement part to move in an optical axial direction against the fixing part, wherein the fixing part includes a first side plate and a second side plate being arranged opposite to each other, and a third side plate and a fourth side plate connecting the first and second side plates and being arranged opposite to each other, wherein the movement part comprises a first side surface and a second side surface being arranged opposite to each other, and a third side surface and a fourth side surface connecting the first side surface and the second side surface being arranged opposite to each other, wherein the first to fourth side plates face the first to fourth side surfaces, wherein the driving magnet moves the movement part in the optical axial direction via the interaction with the coil, wherein the driving magnet includes a first driving magnet being arranged on the first side surface of the movement part, and a second driving magnet being arranged on the third side surface of the movement part, and wherein the ball includes a first ball being arranged in a first corner region where the first side plate and the third side plate of the fixing part are connected, and a second ball being arranged in a second corner region where the second side plate and the fourth side plate of the fixing part are connected.

The first side plate includes a protruded portion being protruded from the inner surface of the first side plate, and the second side plate includes a protruded portion being protruded from the inner surface of the second side plate.

The protruded portion of the first side plate and the protruded portion of the second side plate is rotational symmetrical with respect to an optical axis.

The protruded portion of the first side plate includes a groove, and the first ball is arranged in the groove of the protruded portion of the first side plate.

The first side surface includes a groove being inwardly recessed from an outer surface of the first side surface toward the inside of the movement part, and the second side surface includes a groove being inwardly recessed from an outer surface of the second side surface toward the inside of the movement part.

The protruded portion of the first side plate is arranged in the groove of the first side surface, and the protruded portion of the second side plate is arranged in the groove of the second side surface.

It includes a first yoke being arranged on an outside of the fixed portion and overlapping the first side plate in a direction perpendicular to the optical axis direction, and a second yoke being arranged on the outside of the fixed portion and overlapped with the second side plate in a direction perpendicular to the optical axis direction.

The center of the first yoke is overlapped with a first region of the movement part in a direction perpendicular to the optical axis direction, and the center of the second yoke is overlapped with a second region of the movement part in a direction perpendicular to the optical axis direction.

A lens driving device according to a second embodiment comprises: a fixing part; a movement part being arranged inside the fixing part; a driving magnet being arranged on the movement part; a coil being arranged to correspond to the driving magnet being arranged on the fixing part; and a ball being arranged between the fixing part and the movement part, wherein the ball guides the movement part to move in an optical axis direction against the fixing part, wherein the fixing part includes a first side plate and a second side plate being arranged opposite to each other, and a third side plate and a fourth side plate connecting the first side plate and the second side plate and being arranged opposite to each other, wherein the movement part includes a first side surface and a second side surface being arranged opposite to each other, and a third side surface and a fourth side surface connecting the first side surface and the second side surface and arranged in opposite directions, wherein the first to fourth side plates face the first to fourth side surfaces, wherein the driving magnet moves the movement part in the optical axis direction through interaction with the coil, wherein the driving magnet includes a first driving magnet being arranged on the first side surface of the movement part, and a third driving magnet being arranged on the third side surface of the movement part, wherein the ball includes a first ball and a second ball being arranged in a corner region between the first side plate and the third side plate, and wherein the first ball and the second ball are arranged to be spaced apart from each other.

A camera device comprises: a printed circuit board; an image sensor being arranged on the printed circuit board; a lens driving device being arranged on the printed circuit board; and a lens being arranged in the lens driving device.

The optical instrument comprises: a main body; a display unit being arranged in the main body for displaying information; and a camera module being arranged in the main body for photographing at least one of an image and a photograph.

### [Advantageous Effects]

Through the present embodiment, there is an effect of increasing the AF driving force by arranging the driving magnet and the coil for driving the AF in both directions. In addition, through the present embodiment, there is an effect of increasing the AF driving force by arranging a plurality of driving magnets and coils for driving the AF. That is, when the heights of the cameras are the same, a higher AF driving force can be secured compared to a structure in which the driving magnets and coils for driving the AF are arranged in one direction.

### [Brief Description of Drawings]

FIG. 1 is a perspective view of a lens driving device according to the present embodiment.
FIG. 2 is a plan view of a lens driving device according to the present embodiment.
FIG. 3 is an exploded perspective view of a lens driving device according to the present embodiment.
FIG. 4 is a perspective view of a fixing part in a lens driving device according to the present embodiment.
FIG. 5 is a plan view of a fixing part in a lens driving device according to the present embodiment.
FIG. 6 is a perspective view of a movement part in a lens driving device according to the present embodiment.
FIG. 7 is a plan view of a movement part in a lens driving device according to the present embodiment.

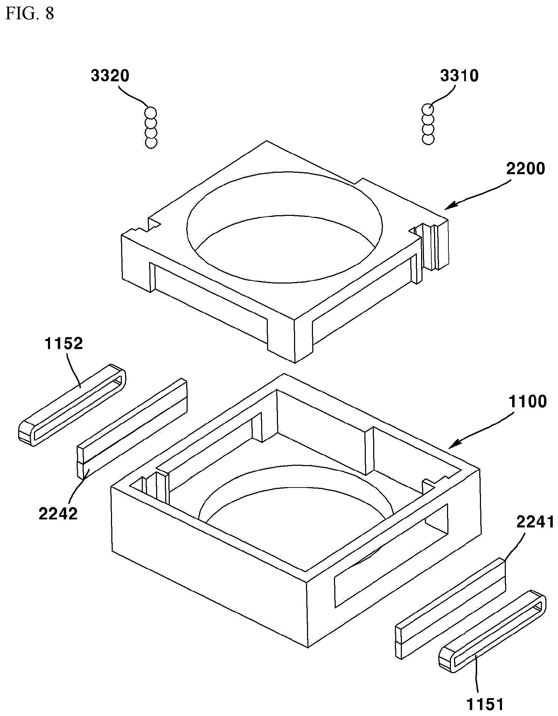

FIG. 8 is an exploded perspective view of a lens driving device according to a first modified embodiment.
FIG. 9 is a plan view of a lens driving device according to a first modified embodiment.
FIG. 10 is a perspective view of a fixing part in a lens driving device according to a first modified embodiment.
FIG. 11 is a plan view of a fixing part in a lens driving device according to a first modified embodiment.
FIG. 12 is a perspective view of the movement part in a lens driving device according to a first modified embodiment.
FIG. 13 is a plan view of the movement part in a lens driving device according to a first modified embodiment.
FIG. 14 is a drawing illustrating a movement part tilting from a fixing part in a lens driving device according to a first modified embodiment.

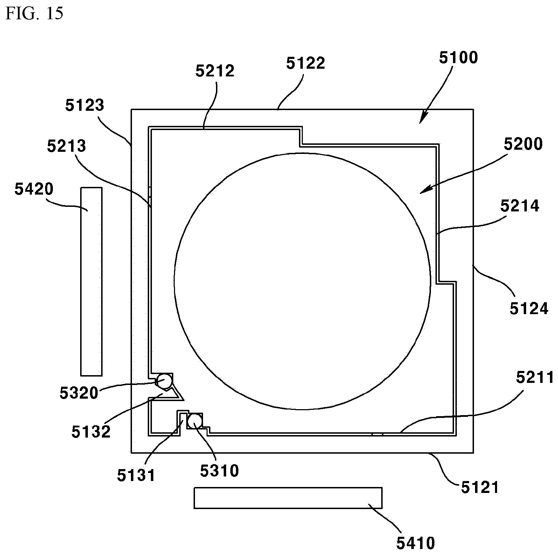

FIG. 15 is a plan view of a lens driving device according to a second modified embodiment.

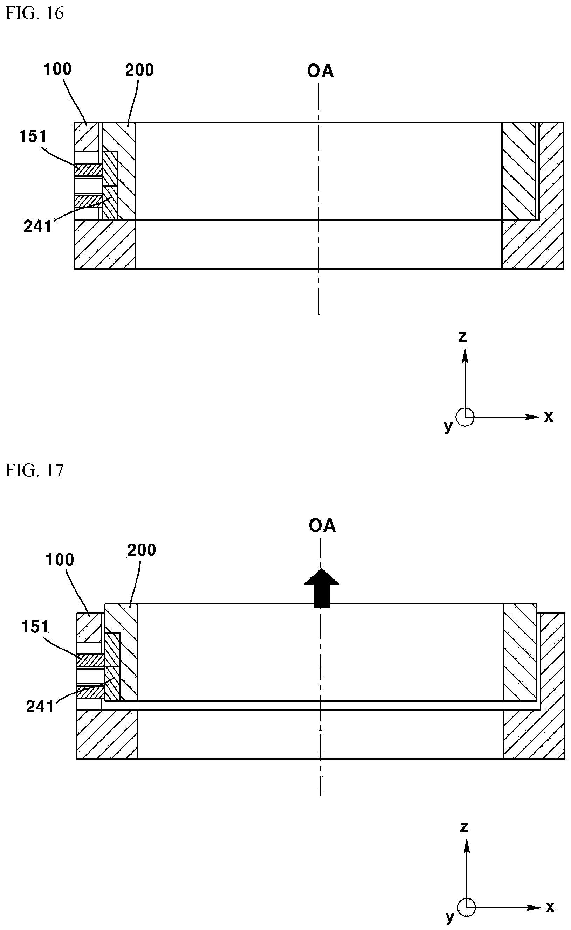

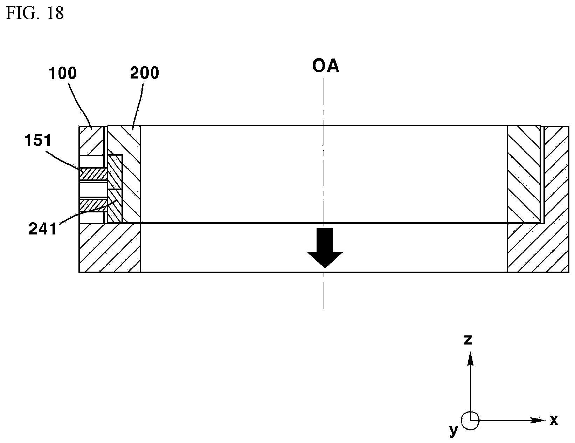

FIGS. 16 to 18 are diagrams for explaining the auto focus driving of a lens driving device according to the present embodiment. FIG. 16 is a cross-sectional view illustrating the appearance of a movement part in an initial state in which no current is applied to a first coil and a second coil. FIG. 17 is a cross-sectional view illustrating the appearance in which a movement part moves upward in an optical axis direction when a forward current is applied to a first coil and a second coil. FIG. 18 is a cross-sectional view illustrating the appearance in which a movement part moves downward in an optical axis direction with reference to the position of a movement part in FIG. 17 when a reverse current is applied to a first coil and a second coil.
FIG. 19 is an exploded perspective view of a camera device according to the present embodiment.
FIG. 20 is a perspective view of an optical instrument according to the present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or arranged in "on (above)" or "below (under)" of each component, "on (above)" or "below (under)" means that it includes not only the case where the two components are directly in contact with, but also the case where one or more other components are formed or arranged between the two components. In addition, when expressed as "on (above)" or "below (under)", the meaning of not only an upward direction but also a downward direction with respect to one component may be included.

Hereinafter, a lens driving device according to the present embodiment is described with reference to the drawings.

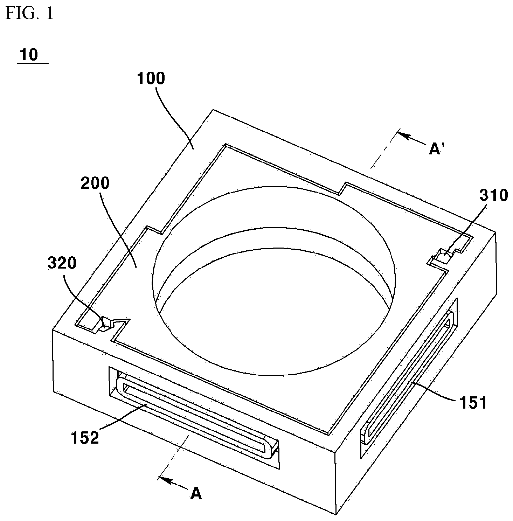

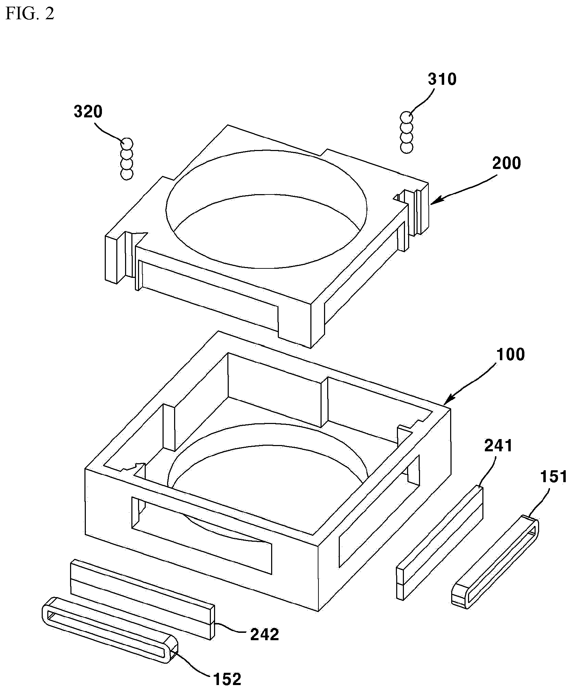

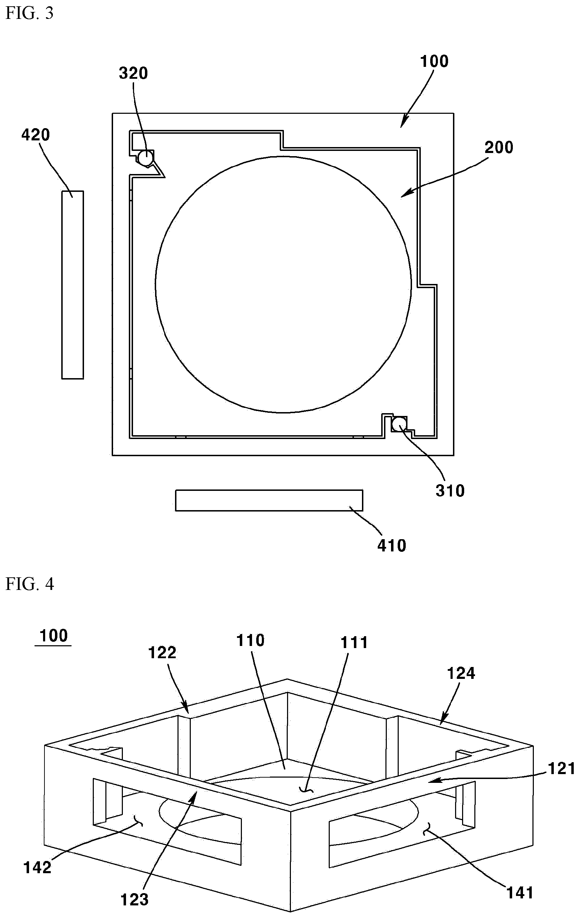

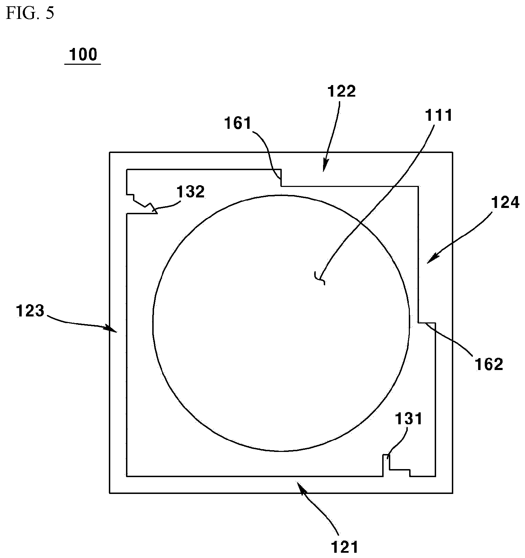

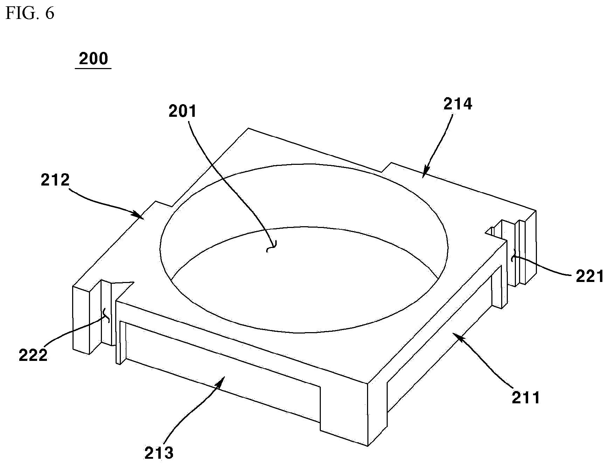

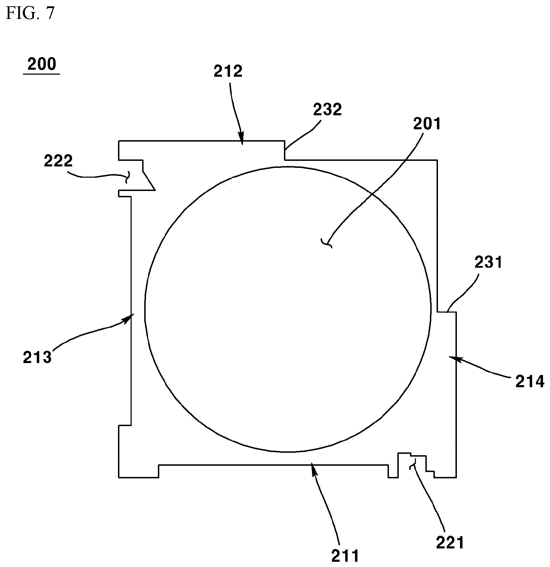

FIG. 1 is a perspective view of a lens driving device according to the present embodiment; FIG. 2 is a plan view of a lens driving device according to the present embodiment; FIG. 3 is an exploded perspective view of a lens driving device according to the present embodiment; FIG. 4 is a perspective view of a fixing part in a lens driving device according to the present embodiment; FIG. 5 is a plan view of a fixing part in a lens driving device according to the present embodiment; FIG. 6 is a perspective view of a movement part in a lens driving device according to the present embodiment; and FIG. 7 is a plan view of a movement part in a lens driving device according to the present embodiment.

The lens driving device may be a lens driving actuator. The lens driving device may be a voice coil motor (VCM). The lens driving device may be a lens driving motor. The lens driving device may include an AF module. The lens driving device may include an OIS module.

The lens driving device **10** according to the present embodiment may include a fixing part **100.**

The fixing part **100** may be a stator. The fixing part **100** may be a relatively fixed part when the movement part **200** moves. The fixing part **100** may include a lower plate **110,** a first side plate **121,** a second side plate **122,** a third side plate **123,** and a fourth side plate **124.** The first side plate **121,** the second side plate **122,** the third side plate **123,** and the fourth side plate **124** may be arranged on the lower plate **110.**

The lower plate **110** may include a lens hole **111.** The lens hole **111** may be a hole penetrating the lower plate **110** in the optical axis direction. The lens hole **111** may be a hole having a circular cross-section. A lens may be placed in the lens hole **111.**

The first side plate **121** may be a side surface of the fixing part **100.** The first side plate **121** may be protruded from the upper surface of the lower plate **110.** The first side plate **121** may be arranged on the opposite side of the second side plate **122.** The first side plate **121** may be connected to the third side plate **123.** The first side plate **121** may be connected to the fourth side plate **124.** The first side plate **121** may include a hole **141.** The hole **141** of the first side plate **121** may be a hole formed in a direction perpendicular to the optical axis direction. A first coil **151** may be arranged in the hole **141** of the first side plate **121.** The hole **141** of the first side plate **121** may have a square shape.

The first side plate **121** may include a first protruded portion **131.** The first protruded portion **131** may be protruded from an inner surface of the first side plate **121** toward an inner side of the fixing part **100.** The first protruded portion **131** may include a step being recessed from an inner side of the fixing part **100** toward an outer side. The step of the first protruded portion **131** may include a plurality of steps. The first protruded portion **131** may include a groove. The groove of the first protruded portion **131** may be a groove in which a first ball **310,** which will be described later, is arranged. The second side plate **122** may be a side surface of the fixing part **100.**

The second side plate **122** may be protruded from an upper surface of the lower plate **110.** The second side plate **122** may be arranged on an opposite side of the first side plate **121.** The second side plate **122** may be connected to the third side plate **123.** The second side plate **122** may be connected to the fourth side plate **124.** The second side plate **122** may include a step **161** that is recessed from an inside toward the outside of the fixing part **100.** The step **161** of the second side plate **122** may correspond to the step **232** of the second side surface **212** of the movement part **200.**

The third side plate **123** may be a side surface of the fixing part **100.** The third side plate **123** may be protruded from an upper surface of the lower plate **110.** The third side plate **123** may be arranged on an opposite side of the fourth side plate **124.** The third side plate **123** may be connected to the first side plate **121.** The third side plate **123** may be connected to the second side plate **122.** The third side plate **123** may include a hole **142.** The hole **142** of the third side plate **123** may be a hole formed in a direction perpendicular to the optical axis direction.

A second coil **152** may be placed in the hole of the third side plate **123.** The hole of the third side plate **123** may have a square shape. The third side plate **123** may include a second protruded portion **132.** The second protruded portion **132** may be protruded from an inner surface of the third side plate **123** toward an inner side of the fixing part **100.** The second protruded portion **132** may include a groove. The groove of the second protruded portion **132** may be a groove in which a second ball **320,** which will be described later, is arranged. The groove of the second protruded portion **132** may be a groove being recessed from the second side plate **122** toward an inner side of the fixing part **100.** The groove of the second protruded portion **132** may be a groove in which the second ball **320** is arranged.

The fourth side plate **124** may be a side surface of the fixing part **100.** The fourth side plate **124** may be protruded from an upper surface of the lower plate **110.** The fourth side plate **124** may be arranged on an opposite side of the third side plate **123.** The fourth side plate **124** may be connected to the first side plate **121.** The fourth side plate **124** may be connected to the second side plate **122.** The fourth side plate **124** may include a step **162** being recessed from an inside to an outside of the fixing part **100.** The step **162** of the fourth side plate **124** may correspond to the step **231** of the fourth side surface **214** of the movement part **200.**

A Hall sensor (not shown) may be arranged on the fixing part **100.** The Hall sensor may be arranged on the first side plate **121.** The Hall sensor may be arranged between the connection portion where the first side plate **121** and the third side plate **123** are connected and the first coil **151.** In addition, the Hall sensor may be arranged on at least one of the first to fourth side plates **121** to **124.** For example, the Hall sensor may be arranged at a corner portion of the fixing part **100** where the first side plate **121** and the third side plate **123** meet. For example, the Hall sensor may be arranged at a corner portion of the fixing part **100** where the second side plate **122** and the fourth side plate **124** meet. The Hall sensor may detect a relative position of the movement part **200** with respect to the fixing part **100.** The Hall sensor can detect the relative position of the movement part **200** to the fixing part **100** through a sensing magnet (not shown). The sensing magnet can be arranged on the first side surface **211** of the movement part **200.** The sensing magnet can be arranged at a position facing the Hall sensor. However, when the Hall sensor is arranged on the first side surface **211** of the movement part **200,** the sensing magnet can be arranged on the first side plate **121.** The lens driving device **10** according to the present embodiment can include the movement part **200.**

The movement part **200** may be a movable part. The movable part may be a mover. The movement part **200** may be a mover. The movement part **200** may move against the fixing part **100.** The movement part **200** may include an AF movable part. The movement part **200** may include an OIS movable part. The movement part **200** may move in an optical axis direction against the fixing part **100.** The movement part **200** may move together with the OIS movable part in a direction perpendicular to the optical axis against the fixing part **100.**

The movement part **200** may include a lens hole **201.** The lens hole **201** of the movement part **200** may be a hole penetrating the movement part **200** in an optical axis direction. A lens may be arranged in the lens hole **201** of the movement part **200.** The lens hole **201** of the movement part **200** may be overlapped with the lens hole **111** of the fixing part **100** in an optical axis direction.

The movement part **200** may include a first side surface **211.** The first side surface **211** may face the first side plate **121.** The first side surface **211** may be overlapped with the first side plate **121** in a direction perpendicular to the first side plate **121** and the optical axis direction,. The first side surface **211** may be overlapped with the first yoke **410** in a direction perpendicular to the first yoke **410** and the optical axis direction. The first side surface **211** may be arranged in a direction opposite to the second side surface **212.** The first side surface **211** may be connected to a third side surface **213.** The first side surface **211** may be connected to a fourth side surface **214.**

The first side surface **211** may include a first groove **221.** The first groove **221** may be arranged at a position corresponding to the first protruded portion **131** of the first side plate **121.** The first protruded portion **131** may be arranged in the first groove **221.** A first ball **310** may be arranged in the first groove **221.** The first groove **221** may be in contact with the first ball **310.** The first groove **221** may be in two-point contact with the first ball **310.** A driving magnet may be arranged in the first side surface **211.** A first driving magnet **241** may be arranged in the first side surface **211.** The first driving magnet **241** may be coupled to the first side surface **211.** The first driving magnet **241** may be coupled to the first side surface **211.** The first driving magnet **241** may be coupled to the first side surface **211** by an adhesive.

The movement part **200** may include a second side surface **212.** The second side surface **212** may be arranged in a direction opposite to the first side surface **211.** The second side surface **212** may be connected to the third side surface **213.** The second side surface **212** may be connected to the fourth side surface **214.** The second side surface **212** may include a step **232.** The step **232** of the second side surface **212** may be a step being recessed from an outer surface of the second side surface **212** toward the inside of the movement part **200.** The step **232** of the second side surface **212** may correspond to the step **161** of the second side plate **122.**

The movement part **200** may include a third side surface **213.** The third side surface **213** may face the third side plate **123.** The third side surface **213** may be overlapped with the third side plate **123** in a direction perpendicular to the third side plate **123** and the optical axis direction. The third side surface **213** may be overlapped with the second yoke **420** in a direction perpendicular to the second yoke **420** and the optical axis direction. The third side surface **213** may be arranged in a direction opposite to the fourth side surface **214.** The third side surface **213** may be connected to the first side surface **211.** The third side surface **213** may be connected to the second side surface **212.**

The third side surface **213** may include a second groove **222.** The second groove **222** may be arranged at a position corresponding to the second protruded portion **132** of the third side plate **123.** A second protruded portion **132** may be arranged in the second groove **222.** A second ball **320** may be arranged in the second groove **222.** The second groove **222** may be in contact with the second ball **320.** The second groove **222** may be in two-point contact with the second ball **320.** A driving magnet may be arranged on the third side surface **213.** A second driving magnet **242** may be arranged on the third side surface **213.** The second driving magnet **242** may be coupled to the third side surface **213.** The second driving magnet **242** may be coupled to the third side surface **213** by an adhesive.

The movement part **200** may include a fourth side surface **214.** The fourth side surface **214** may be arranged in a direction opposite to the third side surface **213.** The fourth side surface **214** may be connected to a first side surface **211.** The fourth side surface **214** may be connected to a second side surface **212.** The fourth side surface **214** may include a step **231.** The step **231** of the fourth side surface **214** may be a step being recessed from an outer surface of the fourth side surface **214** toward an inner side of the movement part **200.** A step of the fourth side surface **214** may correspond to the step **162** of the fourth side plate **124.**

The hall sensor (not shown) may be arranged on the movement part **200.** The Hall sensor may be arranged on the first side surface **211.** The Hall sensor may be arranged between a connection part to which the first side surface **211** and the third side surface **213** are connected and the first driving magnet **241.** The Hall sensor may detect a relative position of the movement part **200** with respect to the fixing part **100.** The Hall sensor may detect a relative position of the movement part **200** with respect to the fixing part **100** through a sensing magnet (not shown). A sensing magnet may be arranged on the first side plate **121** of the fixing part **100.** The sensing magnet may be arranged at a position opposite to the Hall sensor. However, when the Hall sensor is arranged in the first side plate **121** of the fixing part **100,** the sensing magnet may be arranged on the first side surface **211.**

The lens driving device **10** according to the present embodiment may include balls **310** and **320.**

The balls **310** and **320** may be AF balls. The balls **310** and **320** may support the movement part **200.** The balls **310** and **320** may support the movement part **200** moving in an optical axis direction with respect to the fixing part **100.** The balls **310** and **320** may guide the movement part **200** moving in an optical axis direction with respect to the fixing part **100.** Each of the balls **310** and **320** may include a plurality of balls. A plurality of balls may include a first ball **310** and a second ball.

The first ball **310** may be arranged on the first side plate **121.** The first **ball** 310 may be arranged between the first side plate **121** and the fourth side plate **124.** The first ball **310** may be arranged in the groove of the first protruded portion **131.** The first ball **310** may be arranged in a stepped region of the first protruded portion **131.** The first ball **310** may be in contact with the first protruded portion **131.** The first ball **310** may be in two-point contact with the first protruded portion **131.** The first ball **310** may be arranged in the first groove **221** of the first side surface **211.** The first ball **310** may be in two-point contact with the first groove **221.** The first ball **310** may be in two-point contact with the first groove **221.** The first ball **310** may be in contact with the first protruded portion **131** in the first groove **221.** The first ball **310** may be arranged between the first protruded portion **131** and the first groove **221.**

The first ball **310** may include a plurality of first balls **310.** A plurality of first balls **310** may be arranged in an optical axis direction. A plurality of first balls **310** may have the same diameter. Each of a plurality of first balls **310** may have different diameters. Any one of a plurality of first balls **310** may have different diameters. A plurality of first balls **310** may have different diameters of any two of a plurality of first balls **310.**

The second ball **320** may be arranged on the third side plate **123.** The second ball **320** may be arranged between the second side plate **122** and the third side plate **123.** The second ball **320** may be arranged in the groove of the second protruded portion **132.** The second ball **320** may be arranged in the stepped region of the second protruded portion **132.** The second ball **320** may be in contact with the second protruded portion **132.** The second ball **320** may be in two-point contact with the second protected portion **132.** The second ball **320** may be arranged in the second groove **222** of the third side surface **213.** The second ball **320** may be in two-point contact with the second groove **222.** The second ball **320** may be in two-point contact with the second groove **222.** The second ball **320** may be in contact with the second protruded portion **132** in the second groove **222.** The second ball **320** may be arranged between the second protruded portion **132** and the second groove **222.**

The second ball **320** may include a plurality of second balls **320.** A plurality of second balls **320** may be arranged in an optical axis direction. A plurality of second balls **320** may have the same diameter. Each of a plurality of second balls **320** may have different diameters. A plurality of second balls 320 may have different diameters.

The lens driving device **10** according to the present embodiment may include yoke **410** and **420.**

The yoke **410** and **420** may be a metal plate. The yoke **410** and **420** may be a part of the cover of the lens driving device. In the drawing, the cover of the lens driving device **10** is omitted, but the yoke **410** and **420** may correspond to a part of the cover of the lens driving device **10.** The yoke **410** and **420** may be extended from the cover of the lens driving device. The yoke **410** and **420** may be arranged to be overlapped with the driving magnets **241** and **242** in a direction perpendicular to the optical axis direction. The yoke **410** and **420** may be arranged outside the fixing part **100.**

The yoke **410** and **420** may include a first yoke **410.** The first yoke **410** may be arranged to be overlapped with the first side plate **121** of the fixing part **100** in a direction perpendicular to the optical axis direction. The yoke **410** and **420** may include a second yoke **420.** The second yoke **420** may be arranged to be overlapped with the third side plate **123** of the fixing part **100** in a direction perpendicular to the optical axis direction.

The movement part **200** may move a predetermined distance in the direction of the first corner region by the magnetic force being applied between the first yoke **410** and the first driving magnet **241** and the magnetic force being applied between the second yoke **420** and the second driving magnet **242.** The movement part **200** may be in close contact with the first corner region by the magnetic force applied between the first yoke **410** and the first driving magnet **241** and the magnetic force being applied between the second yoke **420** and the second driving magnet **242** inside the fixing part **100.** Here, the first corner region may be a region in which the first side plate **121** and the third side plate **123** are connected. The first corner region may be a region between the first side plate **121** and the third side plate **123.**

Since the movement part **200** is in close contact with the first corner region inside the fixing part **100,** the movement part **200** may be stably supported by the first ball **310** and the second ball **320** being arranged between the movement part **200** and the fixing part **100.**

Since the movement part **200** is in close contact with the first corner region inside the fixing part **100** and is supported by the first ball **310** and the second ball **320** of the movement part **200,** the movement part **200** can move stably in an optical axis direction inside the fixing part **100.** In addition, since the movement part **200** is driven by a driving force by the interaction between the first driving magnet **241** and the first coil **151** and a driving force by the interaction between the second driving magnet **242** and the second coil **151,** it can be driven with a greater driving force than when it is driven by one driving magnet and one coil.

Hereinafter, the lens driving device according to the first modification will be described with reference to the drawings. The description of the same contents as those of the above embodiment in relation to the first modified embodiment may be omitted below.

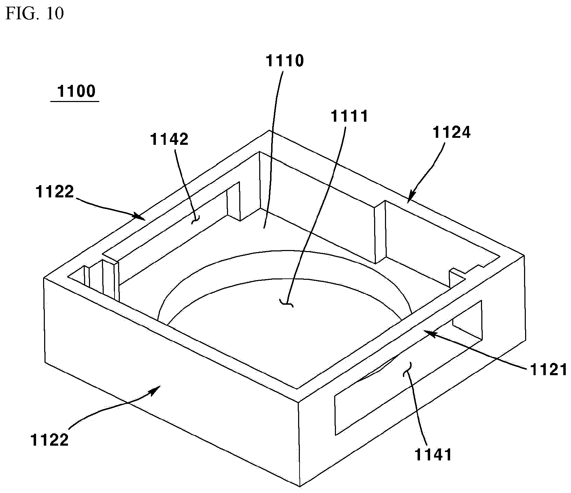

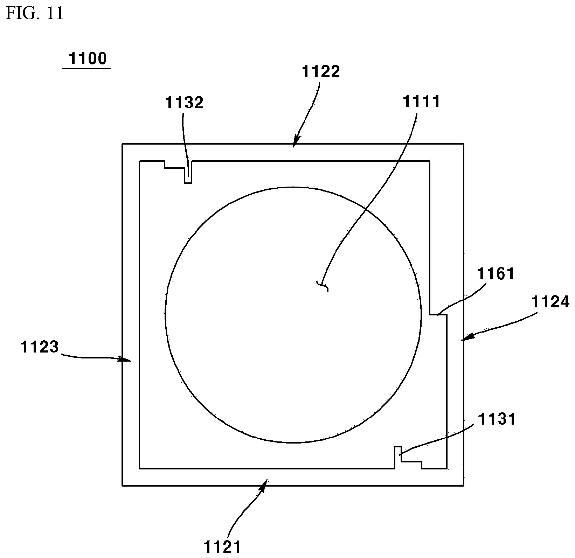

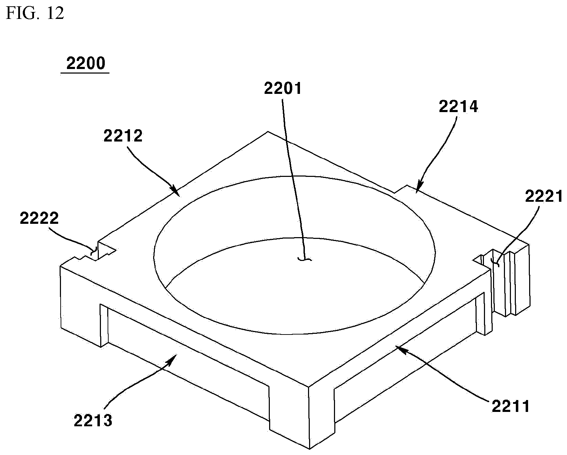

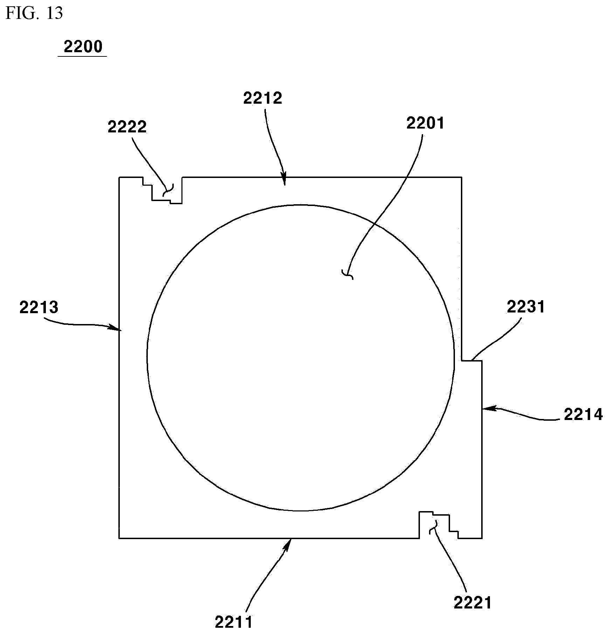

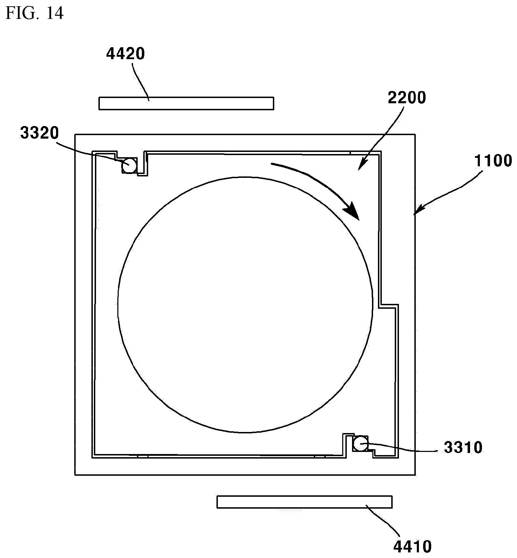

FIG. 10 is a perspective view of a fixing part in a lens driving device according to a first modified embodiment; FIG. 11 is a plan view of a fixing part in a lens driving device according to a first modified embodiment; FIG. 12 is a perspective view of the movement part in a lens driving device according to a first modified embodiment; FIG. 13 is a plan view of the movement part in a lens driving device according to a first modified embodiment; and FIG. 14 is a drawing illustrating a movement part tilting from a fixing part in a lens driving device according to a first modified embodiment.

The lens driving device **10** according to a first modified emergent may include a fixing part **1100.**

The fixing part **1100** may include a first side plate **1121.** The first side plate **1121** may be a side surface of the fixing part **1100.** The first side plate **1121** may be protruded from an upper surface of the lower plate **1110.** The first side plate **1121** may be arranged on an opposite side of the second side plate **1122.** The first side plate **1121** may be connected to the third side plate **1123.** The first side plate **1121** may be connected to the fourth side plate **1124.** The first side plate **1121** may include a hole. The hole **1141** of the first side plate **1121** may be a hole formed in a direction perpendicular to the optical axis direction. The first coil **1151** may be arranged in the hole **1141** of the first side plate **1121.** The hole **1141** of the first side plate **1121** may have a rectangular shape.

The first side plate **1121** may include a first protruded portion **1131.** The first protruded portion **1131** may be protruded from the inner surface of the first side plate 1121 to the inside of the fixing part **1100.** The first protruded portion **1131** may include a step recessed from the inside of the fixing part **1100** to the outside. The step of the first protruded portion **1131** may include a plurality of steps. The first protruded portion **1131** may include a groove. The groove of the first protruded portion **1131** may be a groove in which a first ball **3310** to be described later is arranged.

The second side plate **1122** may be a side surface of the fixing part **1100.** The second side plate **1122** may be protruded from an upper surface of the lower plate **1110.** The second side plate **1122** may be arranged on the opposite side of the first side plate **1121.** The second side plate **1122** may be connected to the third side plate **1123.** The second side plate **1122** may be connected to the fourth side plate **1124.**

The second side plate **1122** may include a hole **1142.** The hole **1142** of the second side plate **1122** may be a hole formed in a direction perpendicular to the optical axis direction. A second coil **1152** may be arranged in the hole of the second side plate **1122.** The hole **1142** of the second side plate **1122** may have a rectangular shape. The second side plate **1122** may include a second protruded portion **1132.** The second protruded portion **1132** may be protruded from the inner surface of the second side plate 1122 toward the inside of the fixing part **1100.** The second protruded portion **1132** may include a groove. The groove of the second protruded portion **1132** may be a groove in which the second ball **332** is arranged. The groove of the second protruded portion **1132** may be a groove recessed in a direction from the second side plate **1122** toward the inside of the fixing part **1100.** The second protruded portion **1132** may be rotational symmetry with respect to the first protruded portion **1131** with respect to an optical axis.

The third side plate **1123** may be a side surface of the fixing part **1100.** The third side plate **1123** may be protruded from an upper surface of the lower plate **1110.** The third side plate **1123** may be arranged on the opposite side of the fourth side plate **1124.** The third side plate **1123** may be connected to the first side plate **1121.** The third side plate 1123 may be connected to the second side plate **1122.**

The fourth side plate **1124** may be a side surface of the fixing part **1100.** The fourth side plate **1124** may be protruded from an upper surface of the lower plate **1110.** The fourth side plate **1124** may be arranged on an opposite side of the third side plate **1123.** The fourth side plate **1124** may be connected to the first side plate **1121.** The fourth side plate **1124** may be connected to the second side plate **1122.** The fourth side plate **1124** may include a step **1151** being recessed from the inside toward the outside of the fixing part **1100.** The step **1151** of the fourth side plate **1124** may correspond to the step **1151** of the fourth side surface **1124** of the movement part.

The lens driving device **10** according to a first embodiment assembly may include a movement part **2200.**

The movement part **2200** may include a first side surface **2211.** The first side surface **2211** may face the first side plate **1121.** The first side surface **2211** may be overlapped with the first side plate **1121** in a direction perpendicular to the optical axis direction with the first side plate **1121.** The first side surface **2211** may be overlapped with the first yoke **4410** in a direction perpendicular to the optical axis direction. The first side surface **2211** may be arranged in a direction opposite to the second side surface **2212.** The first side surface **2211** may be connected to a third side surface **2213.** The first side surface **2211** may be connected to a fourth side surface **2214.**

The first side surface **2211** may include a first groove **2221.** The first groove **2221** may be arranged at a position corresponding to the first protruded portion **1131** of the first side plate 1121. The first protruded portion **1131** may be arranged in the first groove **2221.** A first ball **3310** may be arranged in the first groove **2221.** The first groove **2221** may be in contact with the first ball **3310.** The first groove **2221** may be in two-point contact with the first ball **3310.** Driving magnets may be arranged at the first side surface **2211.** A first driving magnet **2241** may be arranged at the first side surface **2211.** The first driving magnet **2241** may be coupled to the first side surface **2211.** The first driving magnet **2241** may be coupled to the first side surface **2211.** The first driving magnet **2241** may be coupled to the first side surface **2211** by an adhesive.

The movement part **2200** may include a second side surface **2212.** The second side surface **2212** may face the second side plate **1122.** The second side surface **2212** may be overlapped with the second side plate **1122** in a direction perpendicular to the second side plate **1122** and the optical axis direction. The second side surface **2212** may be overlapped with the second yoke **4420** in a direction perpendicular to the second yoke **4420** and the optical axis direction. The second side surface **2212** may be arranged in a direction opposite to the first side surface **2211.** A second side surface **2212** may be connected to a third side surface **2213.** A second side surface **2212** may be connected to a fourth side surface **2214.**

The second side surface **2212** may include a second groove **2222.** The second groove **2222** may be arranged at a position corresponding to the second protruded portion **1132** of the second side plate **1122.** The second groove **2222** may be rotational symmetry with respect to the first groove **2221** and the optical axis. A second protruded portion **1132** may be arranged in the second groove **2222.** A second ball **332** may be arranged in the second groove **2222.** The second groove **2222** may be in contact with the second ball **3320.** The second groove **2222** may be in two-point contact with the second ball **3320.** A driving magnet may be arranged on the second side surface **2212.** A second driving magnet **2242** may be arranged on the second side surface. The second driving magnet **2242** may be coupled to the second side surface **2212.** The second driving magnet **2242** may be coupled to the second side surface **2212** by an adhesive.

The movement part **2200** may include a third side surface **2213.** The third side surface **2213** may be arranged in a direction opposite to the fourth side surface **2214.** The third side surface **2213** may be connected to the first side surface **2211.** The third side surface **2213** may be connected to the second side surface **2212.**

The movement part may include a fourth side surface **2214.** The fourth side surface **2214** may be arranged in a direction opposite to the third side surface **2213.** The fourth side surface **2214** may be connected to the first side surface **2211.** The fourth side surface **2214** may be connected to the second side surface **2212.** The fourth side surface **2214** may include a step **2231.** The step **2231** of the fourth side surface **2214** may be a step being recessed from an outer surface of the fourth side surface **2214** toward the inside of the movement part. The step **2231** of the fourth side surface **2214** may correspond to the step **1161** of the fourth side plate **1124.**

The lens driving device **10** according to the first modified embodiment may include balls **3310** and **3320.**

The balls **3310** and **3320** may be AF balls. The balls **3310** and **3320** may support the movement part **2200.** The balls **3310** and **3320** may support the movement part **2200** that moves in an optical axis direction with respect to the fixing part **1100.** The balls **3310** and **3320** may include a plurality of balls. A plurality of balls may include a first ball **3310** and a second ball **3320.**

The first ball **3310** may be arranged in the first side plate **1121.** The first ball **3310** may be arranged in the groove of the first protruded portion **1131.** The first ball **3310** may be arranged in a stepped region of the first protruded portion **1131.** The first ball **3310** may be in contact with the first protruded portion **1131.** The first ball **3310** may be in two-point contact with the first protruded portion **1131.** The first ball **3310** may be arranged in the first groove **2221** of the first side surface **2211.** The first ball **3310** may be in two-point contact with the first groove **2221.** The first ball **3310** may be in contact with the first groove **2221.** The first ball **3310** may be in contact with the first protruded portion **1131** in the first groove **2221.**

The lens driving device **10** according to a first modified embodiment may include yokes **4410** and **4420.**

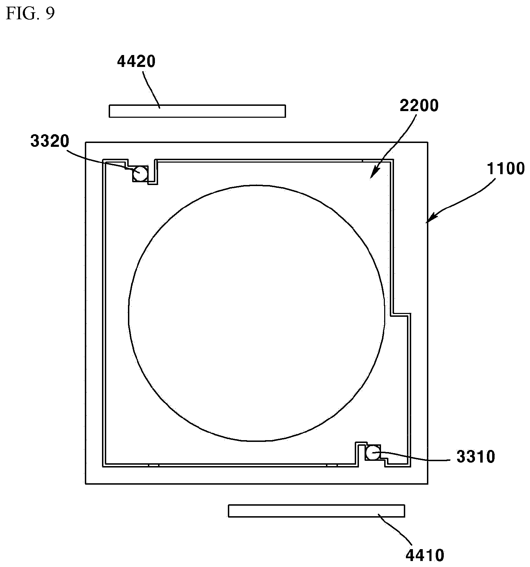

The yoke may include a first yoke **4410.** The first yoke 4410 may be arranged to be overlapped with the first side plate **1121** of the fixing part **1100** in a direction perpendicular to an optical axis direction. Referring to FIG. 9, a center of the first yoke **4410** in a longitudinal direction may be arranged on the right side of the center of the lens hole.

The yoke may include a second yoke **4420.** The second yoke **4420** may be arranged to be overlapped with the second side plate **1122** of the fixing part **1100** in a direction perpendicular to the optical axis direction. Referring to FIG. 9, a center of the second yoke **4420** in a longitudinal direction may be arranged at a left side of a center of the lens hole.

Referring to FIG. 14, the movement part **2200** may be tilted about an optical axis in the fixing part **1100** by the magnetic force between the first driving magnet **2241** and the first yoke **4410** and the magnetic force between the second driving magnet **2242** and the second yoke **4420.**

The movement part **2200** may be tilted with respect to the optical axis by the magnetic force applied between the first yoke **4410** and the first driving magnet **2241** and the magnetic force applied between the second yoke **4420** and the second driving magnet **2242.** The movement part **2200** may be in close contact with the first ball **3310** and the second ball **332** by the magnetic force applied between the first yoke **4410** and the first driving magnet **2241** and the magnetic force applied between the second yoke **4420** and the second driving magnet **2242.** The fixing part **1100** may be in close contact with the first ball **3310** and the second ball **3320.** Accordingly, the movement part **2200** may be stably supported by the first ball **3310** and the second ball **3320,** and the movement part **2200** may be stably moved in an optical axis direction inside the fixing part **1100.** In addition, since the movement part **2200** is driven by the driving force by the interaction between the first driving magnet **2241** and the first coil **1151,** and the driving force by the interaction between the second driving magnet **2242** and the second coil **1152,** it can be driven with a greater driving force than when it is driven by one driving magnet and one coil.

Hereinafter, a lens driving device according to a second modified embodiment will be described with reference to the drawings. The description of the same contents as the above embodiment in relation to the modified embodiment may be omitted below.

The lens driving device **10** according to a second modified embodiment may include a fixing part **5100.**

The fixing part **5100** may be a stator. The fixing part **5100** may be a relatively fixed part when the movement part **5200** moves. The fixing part **5100** may include the first side plate **5121,** a second side plate **5122** arranged in a direction opposite to the first side plate **5121,** a third side plate **5122** connected to the first side plate **5121** and the second side plate **5122,** and a fourth side plate **5124** arranged in a direction opposite to the first side plate **5121** and the second side plate **5122.**

The first side plate **5121** may include a first protruded portion **5131.** The first protruded portion **5131** may be protruded from an inner surface of the first side plate **5121** to an inner side of the fixing part **5100.** The first protruded portion **5131** may be arranged at a corner region between the first side plate **5121** and the third side plate **5123.** The third side plate **5123** may include a second protruded portion **5132.** The second protruded portion **5132** may be protruded from an inner surface of the third side plate **5123** to an inner side of the fixing part **5100.** The second protruded portion **5132** may be arranged at a corner region between the first side plate **5121** and the third side plate **5123.**

The lens driving device **10** according to a second modified embodiment may include a movement part **5200.**

The movement part **5200** may include a first side surface **5211,** a second side surface **5212** arranged in an opposite direction of the first side surface, a third side surface **5213,** connected to the first side surface **5211** and the second side surface **5212,** connected to the first side surface **5211** and the second side surface **5212,** connected to the first side surface **5211,** and a fourth side surface 5214 arranged in an opposite direction of the third side surface **5213.**

The first side surface **5211** may include a first groove. The first groove may be arranged at a position corresponding to the first protruded portion 5131 of the first side plate **5121.** The first protruded portion **5131** may be arranged in the first groove. The first ball **5310** may be arranged in the first groove.

A first driving magnet may be arranged on the first side surface **5211.** The first driving magnet may be arranged to be overlapped with the first yoke **5410** in a direction perpendicular to the optical axis. The first driving magnet may be arranged to be overlapped with the first coil arranged on the first side plate **5121** in a direction perpendicular to the optical axis.

The third side surface **5213** may include a second groove. The second groove may be arranged at a position corresponding to the second protruded portion 5132 of the third side plate **5123.** The second protruded portion **5132** may be arranged in the second groove. A second ball **5320** may be arranged in the second groove.

A second driving magnet may be arranged on the third side surface **5213.** The second driving magnet may be arranged to be overlapped with the second yoke **5420** in a direction perpendicular to the optical axis. The second driving magnet may be arranged to be overlapped with the second coil being arranged on the third side plate **5123** in a direction perpendicular to the optical axis.

A lens driving device **10** according to a second modified embodiment may include a first ball **5310** and a second ball **5320.**

The first ball **5310** and the second ball **5320** may be arranged at a corner region between the first side plate **5121** and the third side plate **5123.** The first ball **5310** and the second ball **5320** may be arranged to be spaced apart from each other.

A lens driving device **10** according to a second modified embodiment may include yokes **5410** and **5420.** The yokes **5410** and **5420** may include a first yoke **5410.** The first yoke **5410** may be arranged to be overlapped with the first driving magnet arranged on the first side surface **5211** in a direction perpendicular to the optical axis direction. The yokes **5410** and **5420** may include a second yoke **5420.** The second yoke **5420** may be arranged to be overlapped with the second driving magnet arranged on the third side surface **5213,** in a direction perpendicular to the optical axis direction.

The movement part **5200** may move a predetermined distance in a direction of a first corner region by a magnetic force acting between the first yoke **5410** and the first driving magnet arranged on the first side surface **5211** and a magnetic force acting between the second yoke **5420** and the second driving magnet arranged on the third side surface **5213.** The movement part **5200** may be moved by a predetermined distance in a direction of a first corner region by the magnetic force acting between the first yoke **5410** and the first driving magnet being arranged on the first side surface **5211** and the second driving magnet being arranged on the second yoke **5420** and the third side surface **5213.** In this case, the first corner region may be a region in which the first side plate **5121** and the third side plate **5123** are connected. The first corner region may be a region between the first side plate **5121** and the third side plate **5123.**

Since the movement part **5200** is in close contact with the first corner region inside the fixing part **5100,** the movement part **5200** may be stably supported by the first ball **5310** and the second ball **5320** arranged between the movement part **5200** and the fixing part **5100.**

Since the movement part **5200** is in close contact with a first corner region inside the fixing part **5100** and is supported by the first ball **5310** and the second ball **5320,** the movement part **5200** can move stably in an optical axis direction inside the fixing part **5100.** Furthermore, since the movement part **5200** is driven by a driving force by the interaction between the first driving magnet and the first coil and a driving force by the interaction between the second driving magnet and the second coil, it can be driven with a greater driving force than when it is driven by one driving magnet and one coil.

Hereinafter, the auto-focus (AF) driving of the lens driving device **10** will be described with reference to the drawings.

FIGS. 16 to 18 are diagrams for explaining the auto focus driving of a lens driving device according to the present embodiment. FIG. 16 is a cross-sectional view illustrating the appearance of a movement part in an initial state in which no current is applied to a first coil and a second coil. FIG. 17 is a cross-sectional view illustrating the appearance in which a movement part moves upward in an optical axis direction when a forward current is applied to a first coil and a second coil. FIG. 18 is a cross-sectional view illustrating the appearance in which a movement part moves downward in an optical axis direction with reference to the position of a movement part in FIG. 17 when a reverse current is applied to a first coil and a second coil.

The movement part may be arranged on a lower plate **110** of the fixing part **100** at an initial position where no current is applied to the first coil **151** and the second coil **152.**

When a forward current is applied to the first coil **151,** the first driving magnet **241** may move upward in an optical axis direction by the electromagnetic interaction between the first coil **151** and the first driving magnet **241.** When a forward current is applied to the second coil **152,** the second driving magnet **242** may move upward in an optical axis direction by the electromagnetic interaction between the second coil **152** and the second driving magnet **242.** At this time, the movement part **200** may move upward in an optical axis direction together with the first driving magnet **241** and the second driving magnet **242.** Furthermore, the lens of the lens hole **111** may move upward in an optical axis direction together with the movement part **200.** Accordingly, the distance between the lens and the image sensor is changed so that a focus of an image being formed on the image sensor through the lens can be adjusted.

When a reverse current is applied to the first coil **151,** the first driving magnet **241** may move downward in an optical axis direction by the electromagnetic interaction between the first coil **151** and the first driving magnet **241.** When a reverse current is applied to the second coil **152,** the second driving magnet **242** may move downward in an optical axis direction by an electromagnetic interaction between the second coil **152** and the second driving magnet **242.** At this time, together with the first driving magnet **241** and the second driving magnet **242,** the movement part **200** may move downward in an optical axis direction. Furthermore, the lens of the lens hole **111** may move downward in an optical axis direction together with the movement part **200.** Accordingly, a distance between the lens and the image sensor is changed so that a focus of an image being formed on the image sensor through the lens may be adjusted.

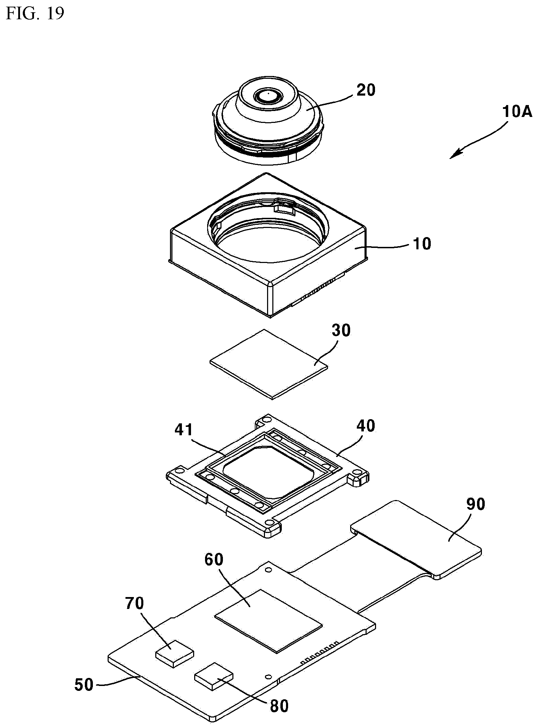

FIG. 19 is an exploded perspective view of a camera device according to the present embodiment.

The camera device **10A** may include a lens module **20.** The lens module **20** may include at least one lens. The lens may be arranged at a position corresponding to the image sensor **60.** The lens module **20** may include a lens and a barrel.

The camera device **10A** may include a filter **30.** The filter **30** may block light of a specific frequency band from passing through the lens module **20** from being incident on the image sensor **60.** The filter **30** may be arranged parallel to an x-y plane. The filter **30** may be arranged between the lens module **20** and the image sensor **60.** The filter **30** may be arranged in the sensor base **40.** In a modified embodiment, the filter **30** may be arranged in the base **110.** The filter **30** may include an infrared filter. The infrared filter may block light in an infrared region from being incident on the image sensor **60.**

The camera device **10A** may include a sensor base **40.** The sensor base **40** may be arranged between the lens driving device **10** and the printed circuit board **50.** The sensor base **40** may include a protruded portion **41** in which a filter **30** is arranged. An opening may be formed in a portion of the sensor base **40** in which the filter **30** is arranged so that light passing through the filter **30** may be incident on the image sensor **60.** The adhesive member may couple or attach the base **110** of the lens driving device **10** to the sensor base **40.** The adhesive member may additionally serve to prevent foreign substances from being introduced into the interior of the lens driving device **10.** The adhesive member may include any one or more among epoxy, a thermosetting adhesive, and an ultraviolet-curable adhesive.

The camera device **10A** may include a printed circuit board (PCB) **50.** The printed circuit board **50** may be a substrate or a circuit board. A lens driving device **10** may be arranged on the printed circuit board **50.** A sensor base **40** may be arranged between the printed circuit board **50** and the lens driving device **10.** The printed circuit board **50** may be electrically connected to the lens driving device **10.** An image sensor **60** may be arranged on the printed circuit board **50.** Various circuits, elements, control units, and the like may be provided on the printed circuit board **50** to convert an image formed on the image sensor **60** into an electrical signal and transmit it to an external device.

The camera device **10A** may include an image sensor **60.** The image sensor 60 may be configured such that light passing through a lens and a filter **30** is incident thereon to an image. The image sensor 60 may be mounted on a printed circuit board **50.** The image sensor **60** may be electrically connected to the printed circuit board **50.** For example, the image sensor **60** may be coupled to the printed circuit board **50** by surface mounting technology (SMT). As another example, the image sensor **60** may be coupled to the printed circuit board **50** by flip chip technology. The image sensor **60** may be arranged such that its optical axis is aligned with that of the lens. That is, the optical axis of the image sensor **60** and the optical axis of the lens may be aligned. The image sensor **60** can convert light irradiated onto the effective image area of the image sensor **60** into an electrical signal. The image sensor **60** can be any one among a charge coupled device (CCD), a metal oxide semi-conductor (MOS), a CPD, and a CID.

The camera device **10A** may include a motion sensor **70.** The motion sensor **70** may be mounted on a printed circuit board **50.** The motion sensor **70** may be electrically connected to a control unit **80** through a circuit pattern provided on the printed circuit board **50.** The motion sensor **70** may output rotational angular velocity information due to the movement of the camera device **10A.** The motion sensor **70** may include a two-axis or three-axis gyro sensor, or an angular velocity sensor.

The camera device **10A** may include a control unit **80.** The control unit **80** may be arranged on a printed circuit board **50.** The control unit **80** may be electrically connected to a coil of a lens driving device **10.** The control unit **80** may individually control the direction, intensity, amplitude, and the like of the current being supplied to the coil. The control unit **80** may control the lens driving device **10** to perform an auto focus function and/or a hand shake correction function. Furthermore, the control unit **80** may perform auto focus feedback control and/or hand shake correction feedback control for the lens driving device **10.**

The camera device **10A** may include a connector **90.** The connector **90** may be electrically connected to a printed circuit board **50.** The connector **90** may include a port for electrically connecting to an external device.

Hereinafter, an optical instrument according to the present embodiment is described with reference to drawings.

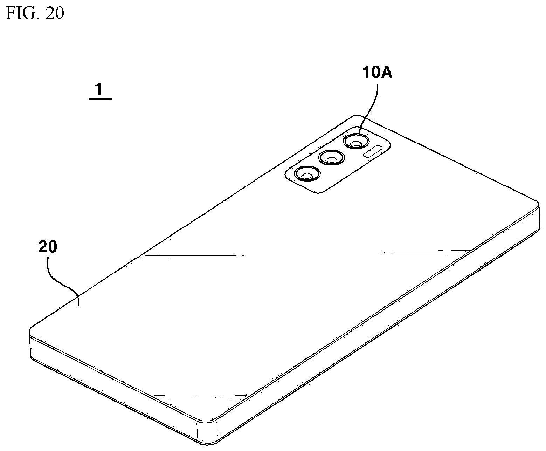

FIG. 20 is a perspective view of an optical instrument according to the present embodiment.

The optical instrument 1 may include at least one among a mobile phone, a cellular phone, a portable terminal, a mobile terminal, a smart phone, a smart pad, a portable smart device, a digital camera, a laptop computer, a digital broadcasting terminal, a Personal Digital Assistants (PDA), a portable multimedia player (PMP), and a navigation device. The optical instrument 1 may include any device for photographing videos or pictures.

The optical instrument 1 may include a main body **20.** The optical instrument 1 may include a camera device **10A.** The camera device **10A** may be arranged in the main body **20.** The camera device **10A** may photograph a subject. The optical apparatus 1 may include a display. The display may be arranged in the main body **20.** The display may output one or more of an image and a video photographed by the camera device **10A.** The display may be arranged on a first surface of the main body **20.** The camera device **10A** may be arranged on one or more of the first surface of the main body 20 and the second surface opposite to the first surface. As illustrated in FIG. 20, in the camera device 10A, a triple camera may be arranged in a vertical direction. As illustrated in FIG. 23, in the camera device **10A,** a triple camera may be arranged in a horizontal direction.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. A lens driving device comprising:
a fixing part;
a movement part being arranged inside the fixing part;
a driving magnet being arranged on the movement part;
a coil being arranged on the fixing part to correspond to the driving magnet; and
a ball being arranged between the fixing part and the movement part,
wherein the ball guides the movement part to move in an optical axial direction against the fixing part,
wherein the fixing part includes a first side plate and a second side plate being arranged opposite to each other, a third side plate and a fourth side plate connecting the first and second side plates and being arranged opposite to each other,
wherein the movement part comprises a first side surface and a second side surface being arranged opposite to each other, and a third side surface and a fourth side surface connecting the first side surface and the second side surface being arranged opposite to each other,
wherein the first to fourth side plates face the first to fourth side surfaces,
wherein the driving magnet moves the movement part in the optical axial direction via the interaction with the coil,
wherein the driving magnet includes a first driving magnet being arranged on the first side surface of the movement part, and a second driving magnet being arranged on the third side surface of the movement part, and
wherein the ball includes a first ball being arranged in a first corner region where the first side plate and the fourth side plate of the fixing part are connected, and a second ball being arranged in a second corner region where the second side plate and the third side plate of the fixing part are connected.

2. The lens driving device according to claim 1,
wherein the first side plate includes a first protruded portion being protruded from an inner surface of the first side plate,
wherein the first protruded portion includes a groove, and
wherein the first ball is arranged in the groove of the first side plate.

3. The lens driving device according to claim 2,
wherein the third side plate includes a second protruded portion being protruded from an inner surface of the third side plate,
wherein the second protruded portion includes a groove, and
wherein the second ball is arranged in the groove of the third side plate.

4. The lens driving device according to claim 3,
wherein the first side surface includes a first groove being formed inwardly of the moving part on the surface of the first side surface, and
wherein the third side surface includes a second groove being formed inwardly of the moving part on the surface of the third side surface.

5. The lens driving device according to claim 4,
wherein the first protruded portion of the first side plate is arranged in the first groove of the first side surface, and
wherein the second protruded portion of the third side plate is arranged in the second groove of the third side surface.

6. The lens driving device according to claim 5,
wherein the first ball is in contact with the first protruded portion of the first side plate and the first groove of the first side surface, and
wherein the second ball is in contact with the second protruded portion of the third side plate and the second groove of the third side surface.

7. The lens driving device according to claim 1 including:
a first yoke being arranged on the outside of the fixed portion and overlapped with the first side plate in a direction perpendicular to the optical axis direction; and
a second yoke being arranged on the outside of the fixed portion and overlapped with the third side plate in a direction perpendicular to the optical axis direction.

8. The lens driving device according to claim 1,
wherein the first ball includes a plurality of first balls,
wherein the second ball includes a plurality of second balls,
wherein the plurality of first balls is arranged in the optical axis direction, and
wherein the plurality of second balls is arranged in the optical axis direction.

9. A lens driving device comprising:
a fixing part;
a movement part being arranged inside the fixing part;
a driving magnet being arranged on the movement part;
a coil being arranged on the fixing part to correspond to the driving magnet; and
a ball being arranged between the fixing part and the movement part,
wherein the ball guides the movement part to move in an optical axial direction against the fixing part,
wherein the fixing part includes a first side plate and a second side plate being arranged opposite to each other, a third side plate and a fourth side plate connecting the first and second side plates and being arranged opposite to each other,
wherein the movement part comprises a first side surface and a second side surface being arranged opposite to each other, and a third side surface and a fourth side surface connecting the first side surface and the second side surface being arranged opposite to each other,
wherein the first to fourth side plates face the first to fourth side surfaces,
wherein the driving magnet moves the movement part in the optical axial direction via the interaction with the coil,
wherein the driving magnet includes a first driving magnet being arranged on the first side surface of the movement part, and a second driving magnet being arranged on the third side surface of the movement part, and
wherein the ball includes a first ball being arranged in a first corner region where the first side plate and the third side plate of the fixing part are connected, and a second ball being arranged in a second corner region where the second side plate and the fourth side plate of the fixing part are connected.

10. The lens driving device according to claim 9,
wherein the first side plate includes a protruded portion being protruded from the inner surface of the first side plate, and
wherein the second side plate includes a protruded portion being protruded from the inner surface of the second side plate.
